# EUROPEAN PATENT SPECIFICATION

(11) **EP 3 008 333 B1**
(45) Date of publication and mention of the grant of the patent: **13.02.2019**
(21) Application number: 14748289.7
(22) Date of filing: 05.06.2014
(51) Int. Cl.: F03D 5/00

(54) **KITE WIND ENERGY COLLECTOR**
DRACHEN ZUR GEWINNUNG VON ENERGIE AUS WIND
CERF-VOLANT POUR UN SYSTÈME À EXTRAIRE DE L'ÉNERGIE DU VENT

(30) Priority: 12.06.2013 IT TO20130481
(43) Date of publication of application: 20.04.2016
(73) Proprietor: Kite Gen Research S.R.L., 10099 San Mauro Torinese (TO) (IT)
(72) Inventor: IPPOLITO, Massimo, 10099 San Mauro Torinese (TO) (IT)
(74) Representative: Garavelli, Paolo
(86) International application number: PCT/IT2014/000155
(87) International publication number: WO 2014/199407

(56) References cited:
- EP-A1- 0 841 480
- WO-A2-2011/121557
- US-A1- 2002 040 948
- US-A1- 2007 126 241

## Description

The present invention refers to a wing with bi-mode operation. An example prior art device is known from US2002/0040948.

In all common aerodynamic applications, such as for example gas turbine blades and airplane carrier surfaces, the ultimate objective of the aerodynamic profile is transferring a distributed load towards the base of the blade or the wing. The structural resistance obtained through, for example a double-T longitudinal member, allows contrasting the flexural moment generated by the distributed load.

In case of a power wing profile, belonging to a system used for extracting energy from wind, the presence only of pure tension efforts makes an arc configuration of the wing opening generate an aerodynamic lift useful, at the same time, both for keeping its own shape and for generating energy.

As known, a configuration of pure tension efforts needs a much lower structural resistance with respect to the case in which there is a flexural moment. Consequently, the aerodynamic profile of the power wing profile can be thinned in order to improve the aerodynamic efficiency, namely the lift on resistance ratio, ultimately increasing the energetic performance of a plant at a height for extracting energy from wind.

The extraction of energy from wing occurs through systems comprising ultra-light wings, with high aerodynamic efficiency, subjected to high wing loads, in a tensional structure mode.

Patent application n. WO2008120257, of the same Applicant, discloses a system for extracting energy from wind through a train of power wing airfoils connected in series, driven by means of servo-assisted winches, autonomously controlled by a smart control system. A power wing profile immersed in a wind current is therefore connected, through at least one rope, to a standalone generator which converts into electric current the wind energy captured at troposphere level. The power wing airfoils are drive in order to drag the modules to which they are connected and allow converting wind energy into electric energy through at least one generating system, comprising at least one generator/motor. The ropes are adapted both to transmit mechanical energy from and towards the wing profiles for dragging the modules, and to check the flight trajectory of the wing profiles themselves.

The power that a wing profile is able to subtract from wind is function both of the aerodynamic efficiency of the wing profile and of its area. In particular, such power grows with the square of the aerodynamic efficiency and linearly with the area.

The efficiency of a wing profile depends on the shape of the profile. Such optimum shape must however be kept also when the wing profile is subjected to the stresses of the resistance-lift (*drag-lift*) forces. For such purpose, it is possible to have to use semi-rigid wing profiles.

Differently from completely flexible wing profiles, semi-rigid wing profiles are equipped, for example, with an extremely lightweight frame due to which the wing profiles can assume a similar shape to the one of rigid wings of gliders. The wing profiles can, for example, be structured with lozenges made of polymers. Having to employ semi-rigidity ensures a strong increase of performances, not only due to a better aerodynamic efficiency, but also due to an easier driving.

In particular, rigidity can be asymmetrical with respect to the two sizes of the wing profile in order to guarantee a side flexibility useful to recover the wing profile in a corresponding recovering system.

A first problem dealing with the extraction of energy from wind through systems comprising ultralight wings is given by the aero-elastic distortion of the wing profile subjected to aerodynamic forces. According to sizing and choice of the materials, there is the chance that the rigidity along the wing rope is not enough to keep the profile shape, with the consequent risk of reducing performances and efficiency. The arc shape of the wing is aerodynamically kept during the flight with a lift gradient of the wing section, reducing or nullifying the need of a longitudinal member.

A second problem dealing with extraction of energy from wind through systems comprising ultralight wings is given by the management of a bi-mode flight behavior, assuming a wing sideslip attitude and a productive, namely power generating, attitude. With the sideslip attitude, the wing is recalled through a single constraint rope. In order to have enough stability, in this phase, the arc shape of the flight under productive attitude must be abandoned in favor of a flying configuration.

Patent application n. WO2011121557 deals with the first problem describing a system for actuating the commands for the flight of a power wing profile controlled through at least two cables for converting wind energy into electrical or mechanical energy, comprising a first unit to exert a similar unwinding-winding action of said cables, and a second unit interposed between the power wing profile and the first unit to perform a differential control action for the cables. The system comprises a single motor actuating the second cable control unit and the first unit comprises, for each cable, two series of winding pulleys without overlapping the cable, arranged on respective, mutually overlapped, common horizontal axes.

Patent application n. WO2009035492 deals with the second problem, describing a power wing profile comprising a first control element operating in a first force configuration, in which the first control element is used to keep under control he flight of the power wing profile during a power generating step, the power wing profile further comprising a second control element used for checking the flight of the power wing profile in the second force configuration during the recovery step; in such second step, the force associated with the configuration is reduced with respect to the first step associated with the power generation.

Object of the present invention is solving the above prior art problems, by providing a wind composed of power wing airfoils which allows keeping unchanged the shape of the wing profile and enable a bi-mode flight behavior.

Another object of the present invention is providing a wind comprising a wing surface connected to one or more parallel bumps along the direction of the rope of such power wing airfoils, such wing further comprising at least one joint composed of external cloth edges, respectively connected to a pair of external bumps and of a pair of internal cloth edges, such joint symmetrically converging with respect to a rope belonging to the power wing airfoils.

The above and other objects and advantages of the invention, as will appear from the following description, are obtained with a wing with bi-mode operation as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non-limiting example, with reference to the enclosed drawings, in which:
- Figure 1 shows a front view of a preferred embodiment of a wing according to the present invention;
- Figures 2 and 3 respectively show a plan view of the lower and upper surface of the wing of Figure 1;
- Figures 4 and 5 respectively show an enlarged part IV and V of the wing of Figure 1;

- Figure 6 show a side view of the wing of Figure 1;
- Figure 7 shows an enlarged part VII of the wing of Figure 6;
- Figures 8 and 9 respectively show an axonometric view of the lower and upper surface of the wing of Figure 1;
- Figures 10 and 11 respectively show an enlarged part X and XI of the wing of Figure 8; and
- Figures 12 and 13 respectively show an enlarged part XII and XIII of the wing of Figure 9.

With reference to the Figures, it is possible to note that a wing according to the present invention with bi-mode operation is composed of three or more power wing airfoils 1-1, 1-2, 1-3, connected in series and mutually articulated through at least one articular joint 2, 3 interposed between at least one pair di such adjacent power wing airfoils 1-1, 1-2, 1-3.

Advantageously, each one of such power wing airfoils 1-1, 1-2, 1-3 is composed of at least one rigid quoin, such quoins being mutually articulated by interposing a respective one of such joints 2, 3 to allow the bi-mode function of the wing according to the present invention, in particular concentrating in such joints 2, 3 the possible attitude oscillations. In fact, to be able to suitable manage both the power generating step and the wing sideslip recovery manoeuvre, the set of wing profiles 1-1, 1-2, 1-3 must be able to pass through two shapes, from which the bi-mode operation is obtained: an arc shape, during the generating step, and an undistorted plane shape for the wing sideslip recovery manoeuvre.

Each wing profile 1-1, 1-2, 1-3 comprises at least one wing surface 4 connected to one or more external bumps 5 operating as exoskeleton. The bumps 5, arranged parallel along the direction of the wing rope and external to the wing surface 4, have the advantage of slightly increasing the aerodynamic resistance, but have the advantage of guaranteeing to keep the shape of the respective wing profile 1-1, 1-2, 1-3.

Alternatively, it is possible to provide that one or more bumps 5 are placed along a concave area of the wing surface 4.

The wing surface 4 is preferably made of very resistant cloth, coated with thermoplastic or thermosetting resins: in particular, such cloth performs the double function of resisting to stresses, once having reached the arc shape during the power generating step, and of providing the elastic rigidity, useful to take back the wing according to the present invention to the undistorted plane configuration during the wing sideslip recovery step.

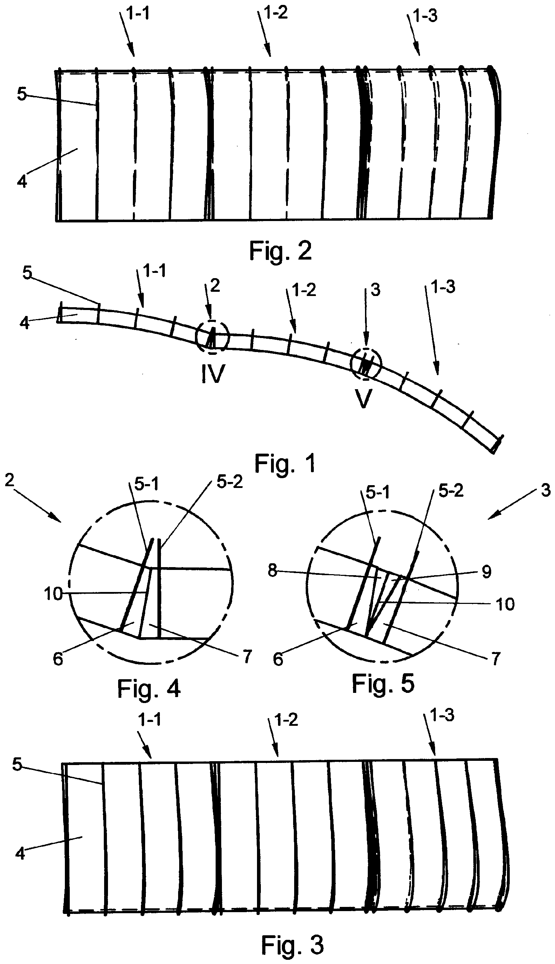

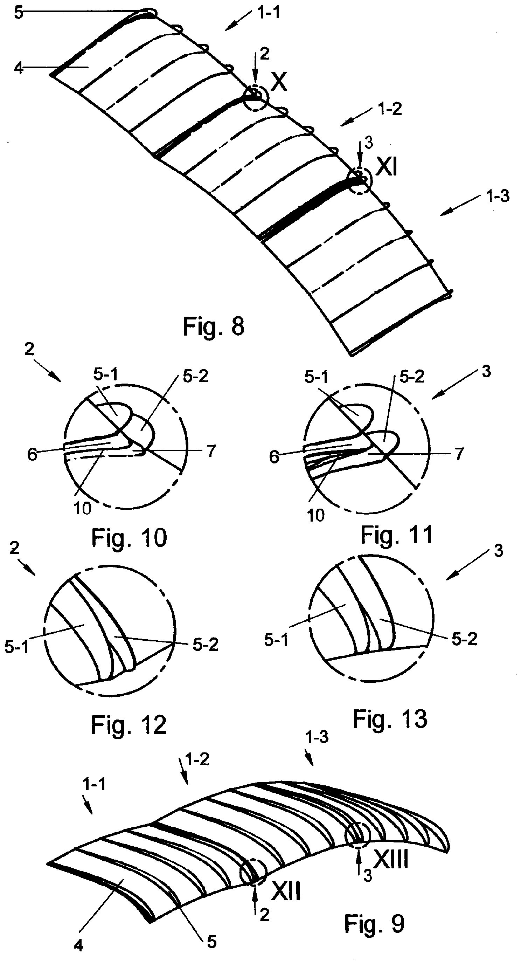

With reference to Figures 4, 5, 10, 11, 12 and 13, each joint 2, 3, is composed of external cloth edges 6, 7, respectively connected to a pair of external bumps 5-1, 5-2, and to a pair of internal cloth edges 8, 9. Each joint 2, 3 is symmetrical with respect to a rope 10 along which the cloth edges 8, 9 converge.

The configuration with undistorted plane shape of the wing according to the present invention, associated with the wing sideslip recovery step, corresponds to the joint 3 in a widespread position (Figures 5, 11 and 13), characterized by the internal cloth edges 8, 9, stretched and tangent to the wing surface 4.

The arc shape configuration of the wing according to the present invention, associated with the power generating step, corresponds to the joint 2 in a contracted position (Figures 4, 10 and 12), characterized by the internal cloth edges 8, 9, bent inside the wing profile, allowing the convergence and the contact along the rope 10 of the pair of external cloth edges 6, 7.

In addition, it is possible to provide that at least the two terminal end power wing airfoils 1-1, 1-3, and in particular the rigid quoins which compose such profiles, to which the control bridles of the wing according to the present invention are connected, are equipped with a reinforcing structure adapted to distribute the loads induced by such bridles at least on such two power wing airfoils 1-1, 1-3.

The present invention obtains its object through an undistorted wing in a plane configuration distorted by aerodynamic loads in an arc configuration, in which the rigidity of the structure allows keeping the undistorted configuration assuming a wing sideslip attitude, and distorting the structure to obtain an arc configuration assuming a power generating attitude.

According to a preferred embodiment of the invention, the shape of the wing is asymmetrical in order to be able to usefully exploit the asymmetry for the skidding step. This configuration offers the chance of making particularly rigid segments along the wing rope direction, which are aerodynamically efficient.

## Claims

1. Wing with bi-mode operation passing from an arc shape to an undistorted plane shape and vice versa, **characterized in that**:
- it is composed of three or more power wing airfoils (1-1, 1-2, 1-3) connected in series and mutually articulated through at least two articulated joints (2, 3) interposed between a pair of said adjacent power wing airfoils (1-1, 1-2, 1-3);
- it comprises wing surfaces (4) connected to parallel ribs (5) along chord direction of said power wing airfoils (1-1, 1-2, 1-3); and
- said joints (2,3) are composed of external cloth edges (6, 7), respectively connected to a pair of external ribs (5-1, 5-2) and to a pair of internal cloth edges (8, 9), each joint (2, 3) being symmetrical with respect to a chord (10) along which the cloth edges (8,9) converge.

2. Wing according to Claim 1, **characterized in that** each one of said power wing airfoils (1-1, 1-2, 1-3) is composed of at least one rigid corner.

3. Wing according to Claim 1, **characterized in that** a configuration in said undistorted plane shape corresponds to one of said joints (2, 3) in a widespread position, said internal cloth edges (8, 9) being stretched and tangent to said wing surface (4) .

4. Wing according to Claim 1, **characterized in that** a configuration in said arc shape corresponds to one of said joints (2, 3) in a contracted position, said internal cloth edges (8, 9) being bent inside said wing profile (1-1, 1-2, 1-3).

5. Wing according to Claim 1, **characterized in that** said one or more ribs (5) are external to said wing surface (4), performing an exoskeleton function.

6. Wing according to Claim 1, **characterized in that** said one or more ribs (5) are placed along a concave area of said wing surface (4).

7. Wing according to Claim 1, **characterized in that** at least two terminal end ones of said power wing airfoils (1-1, 1-3), and in particular said rigid corners composing said profiles, to which control bridles of said wing are connected, are equipped with a reinforcing structure adapted to distribute loads induced by said bridles at least on said two power wing airfoils (1-1, 1-3).

8. Wing according to Claim 1, **characterized in that** said wing surface (4) is made of a cloth coated with thermoplastic or thermosetting resins.

9. Wing according to Claim 1, **characterized in that** it has an asymmetrical shape.

## Patentansprüche

1. Flügel mit bimodaler Funktionsweise, der von einer Bogenform auf eine unverformte ebene Form und umgekehrt wechselt und **dadurch gekennzeichnet ist, dass**:
- er aus drei oder mehreren leistungsstarken Flügelprofilen (1-1, 1-2, 1-3) besteht, die in Reihe und gelenkig zueinander durch mindestens zwei Gelenkkupplungen (2, 3) verbunden sind, welche zwischen einem Paar der genannten nebeneinander angebrachten leistungsstarken Flügelprofile (1-1, 1-2, 1-3) angebracht sind;
- er Flügeloberflächen (4) enthält, die mit Rippen (5) parallel längs einer Gurtrichtung der genannten leistungsstarken Flügelprofile (1-1, 1-2, 1-3) verbunden sind; und
- dass die genannten Kupplungen (2, 3) aus externen Segeltuchstücken (6, 7) gebildet sind, die jeweils mit einem Paar der genannten externen Rippen (5-1, 5-2) und einem Paar der internen Segeltuchstücke (8, 9) verbunden sind, jede Kupplung (2, 3) ist symmetrisch zu einem Gurt (10), längs dem die Segeltuchstücke (8, 9) konvergieren.

2. Flügel gemäß Patentanspruch 1, der **dadurch gekennzeichnet ist, dass** jedes der leistungsstarken Flügelprofile (1-1, 1-2, 1-3) mindestens aus einem festen Quader besteht.

3. Flügel gemäß Patentanspruch 1, der **dadurch gekennzeichnet ist, dass** eine Konfiguration in der genannten unverformten ebenen Form einer der genannten Kupplungen (2, 3) in erweiterter Position entspricht, die genannten internen Segeltuchstücke (8, 9) sind ausgedehnt und tangential zur genannten Flügeloberfläche (4).

4. Flügel gemäß Patentanspruch 1, der **dadurch gekennzeichnet ist, dass** eine Konfiguration in der genannten Bogenform einer der genannten Kupplungen (2, 3) in zusammengezogener Position entspricht, die genannten internen Segeltuchstücke (8, 9) sind im genannten Flügelprofil (1-1,1-2,1-3) zusammengefaltet.

5. Flügel gemäß Patentanspruch 1, der **dadurch gekennzeichnet ist, dass** eine oder mehrere genannte Rippen (5) außerhalb der genannten Flügeloberfläche (4) liegen, sodass sie die Funktion eines Exoskeletts ausüben.

6. Flügel gemäß Patentanspruch 1, der **dadurch gekennzeichnet ist, dass** eine oder mehrere der genannten Rippen (5) längs eines konkaven Bereichs der genannten Flügeloberfläche (4) angebracht sind.

7. Flügel gemäß Patentanspruch 1, der **dadurch gekennzeichnet ist, dass** mindestens zwei Enden der genannten leistungsstarken Flügelprofile (1-1, 1-3), und insbesondere die genannten festen Winkel, aus denen die genannten Profile zusammengesetzt sind, mit denen Steuergurte des genannten Flügels verbunden sind, mit einer Verstärkungsstruktur ausgestattet sind, die dazu dient, die Lasten zu verteilen, die von den Gurten mindestens auf zwei leistungsstarke Flügelprofile (1-1, 1-3) geleitet werden.

8. Flügel gemäß Patentanspruch 1, der **dadurch gekennzeichnet ist, dass** die genannte Flügeloberfläche (4) aus Segeltuch hergestellt ist, das mit thermoplastischen oder wärmehärtenden Harzen beschichtet ist.

9. Flügel gemäß Patentanspruch 1, der **dadurch gekennzeichnet ist, dass** er eine asymmetrische Form hat.

## Revendications

1. Aile à fonctionnement bi-mode passant d'une forme en arc à une forme plate indéformée et inversement, **caractérisée en ce que** :
- elle est composée de trois ou plusieurs profils alaires de puissance (1-1, 1-2, 1-3) reliés en série et réciproquement articulés à travers au moins deux joints d'articulation (2, 3) interposés entre deux des profils alaires de puissance (1-1, 1-2, 1-3) adjacents ;
- elle comprend des surfaces alaires (4) reliées à des cintres (5) parallèles le long d'une direction de corde des profils alaires de puissance (1-1, 1-2, 1-3) ; et
- les joints (2, 3) sont formés de morceaux de toile externes (6, 7), respectivement reliés à une paire de cintres externes (5-1, 5-2) et une paire de morceaux de toile internes (8, 9) ; chaque joint (2, 3) est symétrique par rapport à une corde (10) le long de laquelle convergent les morceaux de toile (8, 9).

2. Aile, selon la revendication 1, **caractérisée en ce que** chaque profil alaire de puissance (1-1, 1-2, 1-3) est composé au moins d'une pierre de taille rigide.

3. Aile, selon la revendication 1, **caractérisée en ce qu'**une configuration en forme plate indéformée correspond à l'un des joints (2, 3) en position dilatée, où les morceaux de toile internes (8, 9) sont étalés et sont tangents à la surface alaire (4).

4. Aile, selon la revendication 1, **caractérisée en ce qu'**une configuration en forme d'arc correspond à l'un des joints (2, 3) en position contractée, où les morceaux de toile internes (8, 9) sont pliés à l'intérieur du profil alaire (1-1,1-2,1-3).

5. Aile, selon la revendication 1, **caractérisée en ce qu'**un ou plusieurs cintres (5) sont externes à la surface alaire (4), effectuant une fonction d'exosquelette.

6. Aile, selon la revendication 1, **caractérisée en ce qu'**un ou plusieurs cintres (5) sont placés le long d'une zone concave de la surface alaire (4).

7. Aile, selon la revendication 1, **caractérisée en ce qu'**au moins deux extrémités terminales des profils alaires de puissance (1-1, 1-3), et en particulier les angles rigides qui composent ces profils, auxquels sont reliés les brides de contrôle de l'aile, sont dotées d'une structure de renfort apte à distribuer les charges induites par ces brides au moins sur deux des profils alaires de puissance (1-1, 1-3).

8. Aile, selon la revendication 1, **caractérisée en ce que** la surface alaire (4) est réalisé en toile revêtue de résines thermoplastiques ou thermodurcissantes.

9. Aile, selon la revendication 1, **caractérisée en ce qu'**elle a une forme asymétrique.
